**Europäisches Patentamt**

**European Patent Office**

**Office européen des brevets**

(19)

(11) Veröffentlichungsnummer: **0 414 253 A2**

## (12) EUROPÄISCHE PATENTANMELDUNG

(21) Anmeldenummer: 90116241.2

(51) Int. Cl.⁵: **B60R 11/02**

(22) Anmeldetag: 24.08.90

(30) Priorität: 25.08.89 DE 8910173 U

(43) Veröffentlichungstag der Anmeldung:
27.02.91 Patentblatt 91/09

(84) Benannte Vertragsstaaten:
AT BE CH DE DK ES FR GB GR IT LI LU NL SE

(71) Anmelder: **Voit, Stefan, Dipl.-Ing.**
**Purrmannstrasse 15**

D-6670 St. Ingbert(DE)

(72) Erfinder: **Voit, Stefan, Dipl.-Ing.**
**Purrmannstrasse 15**
**D-6670 St. Ingbert(DE)**

(74) Vertreter: **Vièl, Georg, Dipl.-Ing.**
**Am Zimmerplatz 16**
**D-6606 Saarbrücken-Gersweiler(DE)**

(54) Halterung für elektronische Einrichtungen in Kraftfahrzeugen.

(57) Die Erfindung betrifft eine Halterung für elektronische Einrichtungen in Kraftfahrzeugen unter Verwendung eines Schwanenhalses, wobei an dem Schwanenhals eine Haltevorrichtung zur Aufnahme eines mobilen Telefons angeordnet ist.

Der Erfindung liegt die Aufgabe zugrunde, ein mobiles Telefon zu schaffen, das insbesondere für das freie Sprechen in Fahrzeugen geeignet ist.

Diese Aufgabe wird erfindungsgemäß dadurch gelöst, daß auf der Rückseite der Haltevorrichtung ein Kasten zur Aufnahme einer elektronischen Schaltung für eine Gesprächsverstärkung für das Freisprechen vorgesehen ist.

Fig. 2

EP 0 414 253 A2

## HALTERUNG FÜR ELEKTRONISCHE EINRICHTUNGEN IN KRAFTFAHRZEUGEN.

Die Erfindung betrifft eine Halterung für elektronische Einrichtungen in Kraftfahrzeugen unter Verwendung eines Schwanenhalses, wobei an dem Schwanenhals eine Haltevorrichtung zur Aufnahme eines mobilen Telefons angeordnet ist.

In dem DE-GM 88 13 629 ist eine derartige Halterung für elektronische Einrichtungen, insbesondere für ein schnurloses, mobiles Telefon beschrieben, bei der das mobile Telefon funktionell zweckmäßig und vorteilhaft in Reichweite des Fahrers in einer als Tasche ausgebildeten Haltevorrichtung untergebracht, für das Telefonieren leicht herausnehmbar und jederzeit empfangs- und gesprächsbereit ist.

Aus Gründen der Fahrsicherheit soll jedoch das Telefonieren mit derartigen Geräten nicht während des Fahrens erfolgen.

Erst durch eine zusätzliche Freisprechanlage, die im wesentlichen aus einem eingebauten Mikrofon und Lautsprecher, sowie aus einer Gesprächs- und Ruftonverstärkung besteht, wird es dem Fahrer ermöglicht, auch während der Fahrt Telefongespräche zu führen, ohne daß die Fahrsicherheit darunter leidet, d. h. ohne daß der Fahrer, wie bisher üblich, zum Telefonieren den Sprechhörer in die Hand nehmen muß.

Der Erfindung liegt die Aufgabe zugrunde, die aus dem DE-GM 88 13 629 bekannte Haltevorrichtung für ein schnurloses, mobiles Telefon in zweckmäßiger Weise zu ergänzen, so daß elektronische Schaltungen, insbesondere für das Freisprechen in Fahrzeugen, leicht untergebracht werden können.

Diese Aufgabe wird erfindungsgemäß dadurch gelöst, daß auf der Rückseite der Haltevorrichtung ein Kasten zur Aufnahme einer elektronischen Schaltung für eine Gesprächsverstärkung für das Freisprechen vorgesehen ist.

Vorteilhaft ist auch, daß der Kasten zusätzlich eine elektronische Schaltung für eine Ruftonverstärkung aufweist.

Im Rahmen der Erfindung ist auch vorgesehen, daß der Kasten zusätzlich mit einer elektronischen Schaltung für die Ladung von elektronischen Reservebatterien ausgestattet ist.

Eine weitere Ausbildung der Erfindung besteht darin, daß der Kasten zusätzlich eine Lademöglichkeit für die elektrischen Batterien im mobilen Telefon aufweist.

Außerdem hat es sich zur Vermeidung von akustischen Rückkopplungen bei Gesprächsbeginn als vorteilhaft erwiesen, daß als elektrische Schaltung für eine Gesprächsverstärkung für das Freisprechen eine Anordnung gewählt ist, die im Ruhezustand den Lautstärkepegel Null hat, die beim ersten Wähl- oder Anwählimpuls selbsttätig auf eine

Lautstärke von 70 % der Lautstärke schaltet, und daß bei Gesprächsbeginn über einen Tastschalter die Maximallautstärke einstellbar ist.

Die mit der Erfindung erzielten Vorteile bestehen insbesondere darin, daß die elektronischen Schaltungen für eine Gesprächs- und Ruftonverstärkung für das Freisprechen in Kraftfahrzeugen, sowie für das Laden elektrischer Batterien und die Unterbringung von Reservebatterien in die Halterung für das mobile Telefon auf einfache und zweckmäßige Weise integriert wurden.

Ein Ausführungsbeispiel der Erfindung ist in der Zeichnung dargestellt und wird nachfolgend näher beschrieben.

Es zeigen

Fig. 1 und Fig. 2 die erfindungsgemäße Halterung in zwei perspektivischen Ansichten,

Fig. 3 die Rückansicht des erfindungsgemäßen Kastens mit Anordnung der elektronischen Schaltungen und Reservebatterien,

Fig. 4 eine Ansicht des Kastens von unten her gesehen,

Fig. 5 eine Seitenansicht des erfindungsgemäßen Kastens, und

Fig. 6 ein Diagramm des Lautstärkenverlaufes vor, während und nach dem Freisprechen.

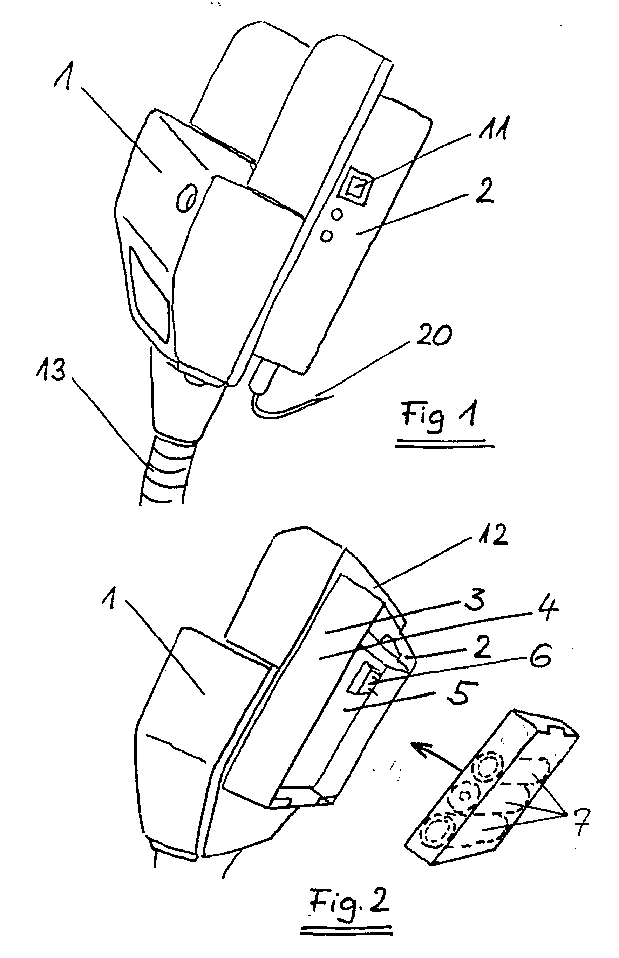

Der Aufbau der Halterung gemäß der Erfindung ist aus den Fig. 1 und 2 zu ersehen, die die Halterung in zwei perspektivischen Darstellungen zeigt. Die Halterung besteht aus der bekannten, auf einem Schwanenhals 13 angebrachten, taschenförmig ausgebildeten Haltevorrrichtung 1 für das schnurlose, mobile Telefon und dem auf der Rückseite 12 der Haltevorrichtung 1 angeordneten Kasten 2 zur Aufnahme von elektronischen Schaltungen für eine Gesprächsverstärkung 3, für eine Ruftonverstärkung 4 und für eine Batterieladung 5. Außerdem bietet der Kasten 2 in vorteilhafter Weise die Möglichkeit, Reservebatterien 7 unterzubringen und an die elektronische Schaltung für eine Batterieladung 5 anzuschließen.

Die Rückansicht des Kastens in Fig. 3 zeigt schematisch eine mögliche Anordnung der elektronischen Schaltungen 3, 4, 5, sowie der Reservebatterien 7 im dem Kasten 2. Die Reservebatterien 7 sind bei dem Ausführungsbeispiel der Erfindung in Fig. 3 über Kontaktfedern 14 elektrisch leitend mit der elektronischen Schaltung für Batterieladung 5 verbunden und aufladbar.

Außerdem weist der Kasten 2, wie aus Fig. 3 weiter hervorgeht, eine Lademöglichkeit 6 in Form von Steckluschen auf, über die eine Energieversorgung weiterer elektrischer Verbraucher im Kraftfahrzeug, beispielsweise der telefoninternen Batterien, aus der elektronischen Schaltung für Batterieladung 5 möglich ist.

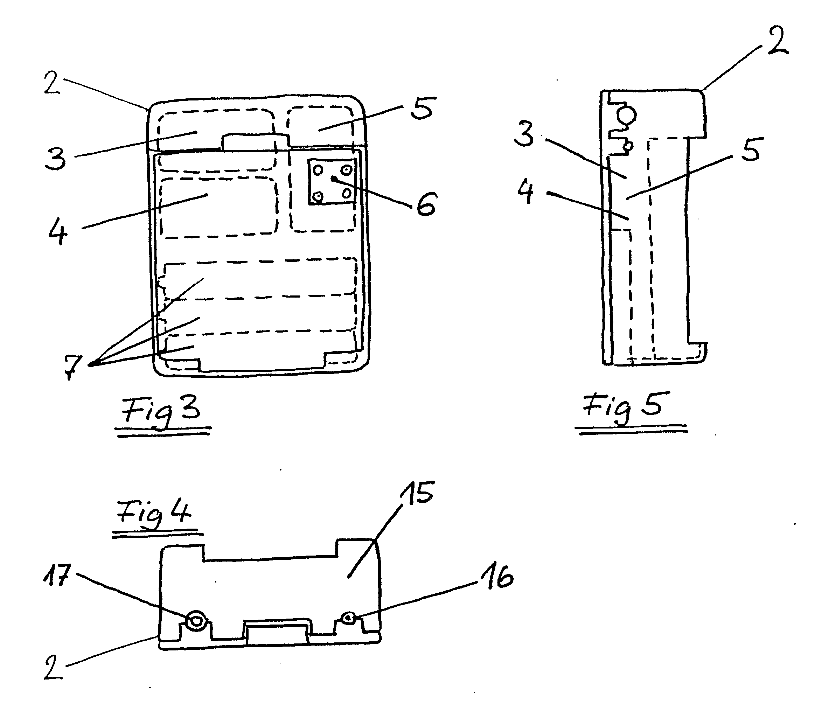

Auf der Unterseite 15 des erfindungsgemäßen Kastens 2 sind, wie in Fig. 4 angedeutet, zwei Buchsen 16, 17 zum Anschluß von Mikrofon- und Lautsprecherkabel 20 für Freisprechen im Kraftfahrzeug angebracht.

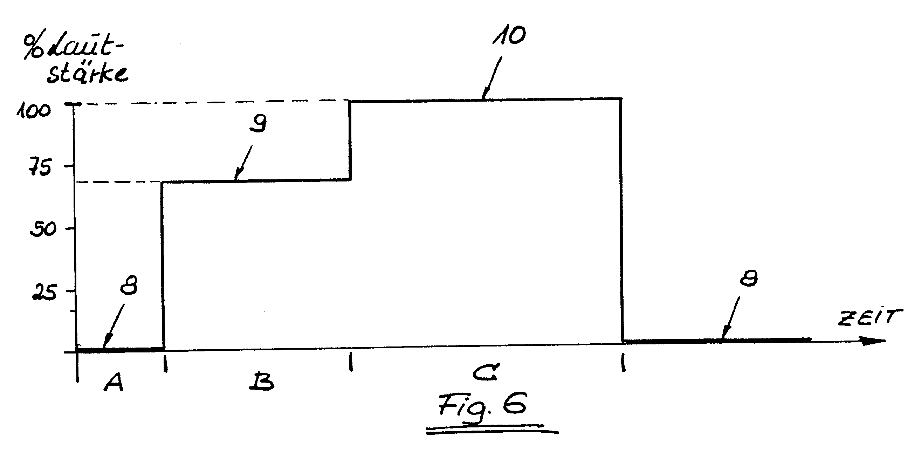

Zur Regelung der Lautstärke beim Freisprechen befindet sich auf einer Seite des Kastens eine entsprechende Lautstärkeregelung 18, wie schematisch die Seitenansicht in Fig. 5 zeigt.

Der erfindungsgemäße Kasten 2 läßt sich vorteilhaft über eine in seine Rückwand eingebrachte Aussparung 19 mit Verriegelungsmechanismus, der schematisch in Fig. 3 und 5 angedeutet ist, lösbar mit der Haltevorrichtung 1 verbinden.

Das in Fig. 6 dargestellte Diagramm zeigt schematisch den Verlauf der Lautstärke beim Freisprechen unter Einbeziehung der elektronischen Schaltung 3 für eine automatische Gesprächsverstärkung. In Ruhestellung (Abschnitt A auf der Abszisse) hat der Lautstärkepegel den Wert Null, der mit dem Bezugszeichen 8 gekennzeichnet ist. Sobald ein Anwählimpuls ankommt oder ein Wählimpuls abgeht, (Beginn des Abschnitts B auf der Abszisse) regelt die elektronische Schaltung 3 selbsttätig auf eine Lautstärke von 70 (Bezugszeichen 9) der Maximallautstärke (Bezugszeichen 10).

Dieser Wert von 70 (Bezugszeichen 9) wird während der gesamten Vermittlungsphase bis zum Melden des Gesprächspartners (Abschnitt B auf der Abszisse) beibehalten, um akustische Rückkopplungen durch nicht angepaßte Lautstärke zu vermeiden.

Nach Gesprächsbeginn (Beginn des Abschnitts C auf der Abszisse) kann durch Drücken des Tasthalters 11 in Fig. 2 die 100 %-Maximallautstärke (Bezugszeichen 10) eingestellt werden. Eine Feinabstimmung der Lautstärke auf die Geräusche im Fahrzeuginnern läßt sich durch die Lautstärkeregelung 18 in Fig. 5 erreichen.

Mit Beendigung des Gespräches (nach Abschnitt C auf der Abszisse) fällt der Lautstärkepegel selbsttätig wieder auf den Wert Null (Bezugszeichen 8).

Die elektronische Schaltung 4 für eine Ruftonverstärkung sorgt dafür, daß bei höheren Fahrgeschwindigkeiten die entsprechenden Signale überhaupt gehört werden. Bei Entnahme des schnurlosen, mobilen Telefons aus der Haltevorrichtung 1 werden die elektronischen Schaltungen für eine Gesprächsverstärkung 3 und für eine Ruftonverstärkung außer Betrieb gesetzt.

Die in der Beschreibung ausgesprochenen elektronischen Schaltungen 3, 4, 5 sind nicht näher beschrieben; sie sind dem Fachmann ohne weiteres aus dem einschlägigen Stand der Technik bekannt.

## Ansprüche

1. Halterung für elektronische Einrichtungen in Kraftfahrzeugen unter Verwendung eines Schwanenhalses, wobei an dem Schwanenhals eine Haltevorrichtung zur Aufnahme eines mobilen Telefons angeordnet ist, **dadurch gekennzeichnet**, daß auf der Rückseite (12) der Haltevorrichtung (1) ein Kasten (2) zur Aufnahme einer elektronischen Schaltung (3) für eine Gesprächsverstärkung für das Freisprechen vorgesehen ist.

2. Halterung nach Anspruch 1, **dadurch gekennzeichnet**, daß der Kasten (2) zusätzlich eine elektronische Schaltung (4) für eine Ruftonverstärkung aufweist.

3. Halterung nach Anspruch 1, **dadurch gekennzeichnet**, daß der Kasten (2) zusätzlich mit einer elektronischen Schaltung (5) für die Ladung von elektrischen Reservebatterien (7) ausgestattet ist.

4. Halterung nach Anspruch 1, **dadurch gekennzeichnet**, daß der Kasten (2) zusätzlich eine Lademöglichkeit (6) für die elektrischen Batterien im mobilen Telefon aufweist.

5. Halterung nach Anspruch 1, **dadurch gekennzeichnet**, daß als elektrische Schaltung (3) für eine Gesprächsverstärkung für das Freisprechen eine Anordnung gewählt ist, die im Ruhezustand den Lautstärkepegel Null (8) hat, die beim ersten Wähl- oder Anwählimpuls selbsttätig auf eine Lautstärke von 70 % (9) der Lautstärke (10) schaltet, und daß bei Gesprächsbeginn über einen Tastschalter (11) die Maximallautstärke (10) einstellbar ist.

Fig 1

Fig. 2

Fig 3

Fig 4

Fig 5

EP 0 414 253 A2

Fig. 6

EP 0 414 253 A2